# EUROPEAN PATENT APPLICATION

(11) **EP 1 670 120 A1**
(43) Date of publication of application: **14.06.2006**
(21) Application number: 04788148.7
(22) Date of filing: 27.09.2004
(51) Int. Cl.: H02K 3/18

(54) **ELECTROMAGNETIC MOTOR**

(30) Priority: 30.09.2003 JP 2003339006
(71) Applicant: Valeo Thermal Systems Japan Corporation, Konan-machi, Osato-gun Saitama 3600193 (JP)
(72) Inventor: TAKAHASHI, Osamu, Zexel Valeo Climate Control Corp, Osato-gun, Saitama 360-0193 (JP); MIZUGUCHI, Tomoyuki, Zexel Valeo Climate Control, Osato-gun, Saitama 360-0193 (JP); OI, Shinichi, Zexel Valeo Climate Control Corp., Osato-gun, Saitama 360-0193 (JP)
(74) Representative: Degwert, Hartmut
(86) International application number: PCT/JP2004/014052
(87) International publication number: WO 2005/034307

(57) **Abstract**

In order to achieve a higher level of efficiency and greater output without complicating the manufacturing process or increasing production costs, an electromagnetic motor according to the present invention adopts a Δ connection structure, which includes a u-phase coil winding unit, a v-phase coil winding unit and a w-phase coil winding unit radially extending from a stator fixed to a rotating shaft and set with a phase difference relative to one another and a first feeding terminal, a second feeding terminal and a third feeding terminal through which a predetermined cm-rent is supplied to coils at the individual phases. The electromagnetic motor is **characterized in that** coils are wound at least twice over through a sequence; the first feeding terminal → the u-phase coil winding unit → the second feeding terminal → the v-phase coil winding unit → the third feeding terminal → the w-phase, winding unit, so as to form at least two coil layers at each coil winding unit among the u-phase coil winding unit, the v-phase coil winding unit and the w-phase coil winding unit.

## Description

### TECHNICAL FIELD

The present invention relates to an electromagnetic motor rotated by an electromagnetic force and more specifically, it relates to a winding structure adopted therein.

### BACKGROUND ART

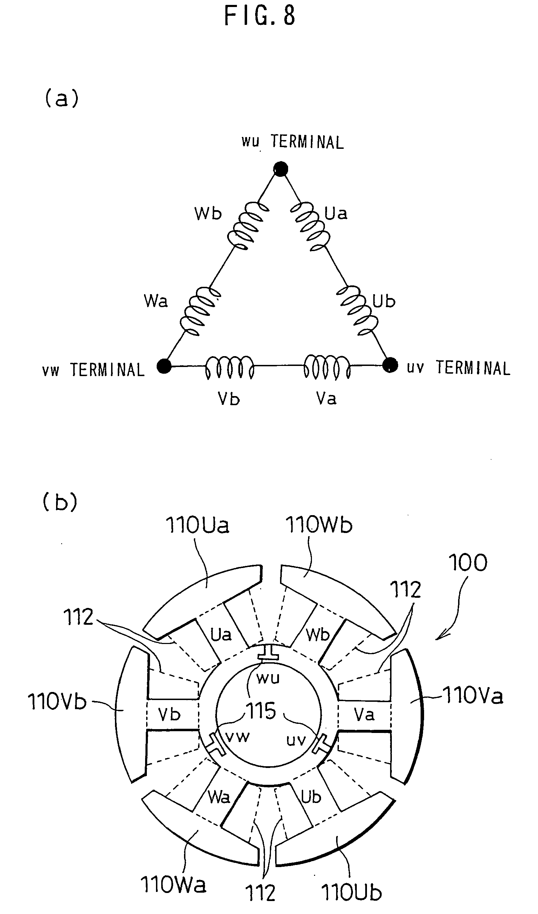

Δ connections and Y connections are adopted in motor winding structures in the related art. In conjunction with a stator 100 which includes six coil winding units 110Ua, 110Ub, 110Va, 110Vb, 110Wa and 110Wb and three feeding points (a uv terminal, a vw terminal and a wu terminal) 115, a Δ connection may be achieved by, for instance, winding coils 112 in series at the coil winding units 110Ua and 110Ub between the vw terminal and the uv terminal, at the coil winding units 110Va and 110Vb between the uv terminal and the vw terminal and at the coil winding units 110Wa and 110Wb between the vw terminal and the wu terminal, as shown in FIGS. 8(a) and 8(b).

A Y connection may be achieved in conjunction with an even number of coils connected in parallel to each other between each feeding point among a u-phase feeding point, a v-phase feeding point and a w-phase feeding point set with a specific phase difference from each other and supplied with three-phase exciting currents, i.e., a u-phase exciting current, a v-phase exciting current and a w-phase exciting current and a neutral point. The individual coils are wired alternately via the comesponding feeding point and the neutral point. Thus, the Y connection is achieved with a single continuous coil winding wire (see patent reference literature 1).

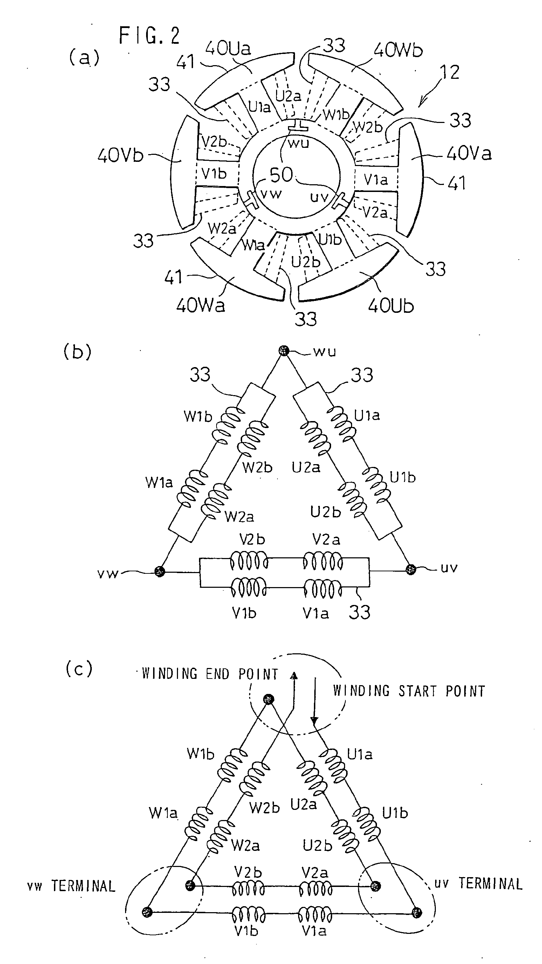

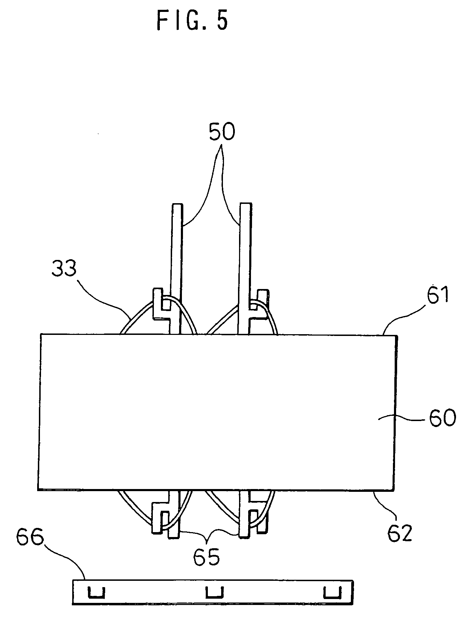

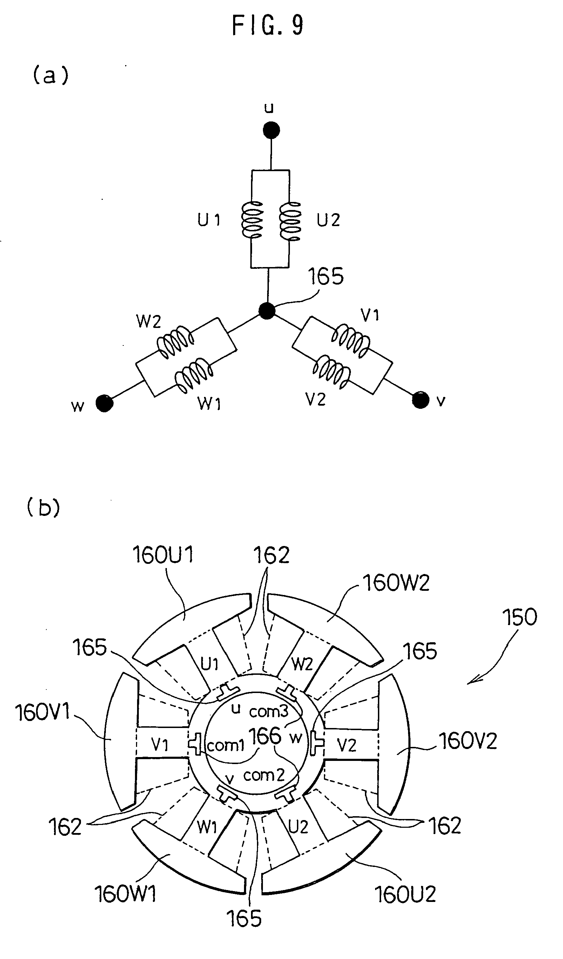

As shown in FIGS. 9(a) and 9(b), the Y connection disclosed in patent reference literature 1 is achieved in a stator 150 that includes six coil winding units 160U1, 160U2, 160V1, 160V2, 160W1 and 160W2, three feeding points (a u terminal, a v terminal and a w terminal) 115 and three neutral points (com1, com2 and com3) 166, by winding coils 162 in parallel to each other at the coil winding units 160U1 and 160U2 between the u terminal and the neutral point 166, at the coil winding units 160V1 and 160V2 between the v terminal and the neutral point 166 and the coil winding units 160W1 and 160W2 between the w terminal and the neutral point 166. patent reference literature 1: Japanese Unexamined Patent Publication No. 2002-199636 (see claim 2, prior art, paragraph [0015] and FIGS. 2 and 5)

### DISCLOSURE OF THE INVENTION

### PROBLEMS TO BE SOLVED BY THE INVENTION

While the Δ connection in the related art, which, unlike the Y connection, requires no neutral points, can be manufactured at low cost, the coil wire needs to be cut in the middle for parallel coil winding, which gives rise to problems in that the manufacturing process is bound to be complicated and the like.

In addition, six power supply terminals, in total, constituted with the feeding points 115 and the neutral points 166, extend toward the control board in the Y connection in the related art. The terminals extending from the neutral points, in particular, are assumed to be connected with one another on the control board so as to achieve potentials equal to one another at the individual neutral points. For this reason, problems such as a complicated manufacturing process, significant manufacturing costs and restrictions on control board design arise.

Accordingly, an object of the present invention is to achieve higher efficiency and higher output without complicating the manufacturing process or increasing the manufacturing costs.

### MEANS FOR SOLVING THE PROBLEMS

In order to achieve the object described above, the present invention provides an electromagnetic motor adopting a Δ connection structure, which includes a u-phase coil winding unit, a v-phase coil winding unit and a w-phase coil winding unit radially extending from a stator fixed to a rotating shaft and set with a phase difference relative to one another and a first feeding terminal, a second feeding terminal and a third feeding terminal through which a predetermined current is supplied to coils at the individual phases. In the electromagnetic motor, coils are wound at least twice over through a sequence; the first feeding terminal → the u-phase coil winding unit → the second feeding terminal → the v-phase coil winding unit → the third feeding terminal → the w-phase coil winding unit, so as to form at least two coil layers at each coil winding unit among the u-phase coil winding unit, the v-phase coil winding unit and the w-phase coil winding unit (claim 1).

In addition, it is desirable that the u-phase coil winding unit, the v-phase coil winding unit and the w-phase coil winding unit each be constituted with a first coil winding unit and a second coil winding unit disposed on a single diagonal and that the coils be wound at least twice over through a sequence; the first feeding terminal → the first u-phase coil winding unit → the second u-phase coil winding unit → the second feeding terminal → the first v-phase coil winding unit → the second v-phase coil winding unit → the third feeding terminal → the first w-phase coil winding unit → the second w-phase coil winding unit (claim 2).

The electromagnetic motor achieved in another mode of the present invention by adopting a Y connection structure, comprising a u-phase coil winding unit, a v-phase coil winding unit and a w-phase coil winding unit radially extending from a stator fixed to a rotating shaft with a phase difference relative to each other, a first feeding terminal, a second feeding terminal and a third feeding terminal through which a predetermined current is supplied to coils at the individual phases and a first neutral point, a second neutral point and a third neutral point with potentials equal to one another, is characterized in that the first through third neutral points are electrically connected with one another via an electrically conductive member at one end surface of the stator or over an area near the one end surface (claim 3).

It is desirable that the first through third feeding terminals in the structure disclosed in claim 3 be disposed at a surface located on a side opposite from the one end surface or in an area near the surface on the opposite side (claim 4).

In addition, the electrically conductive member in the structure disclosed in claim 3 or 4 may include an extended portion to be connected with the control board.

It is desirable that the u-phase coil winding unit, the v-phase coil winding unit and the w-phase coil winding unit in the structure disclosed in any of claims 3 through 5 each be constituted with a first coil winding unit and a second coil winding unit disposed on a single diagonal and that the coils be wound at least once over through a sequence; the first feeding terminal → the first u-phase coil winding unit → the first neutral point → the first v-phase coil winding unit → the second feeding terminal → the second v-phase coil winding unit → the second neutral point → the first w-phase coil winding unit → the third feeding terminal → the second w-phase coil winding unit - the third neutral point → the second u-phase coil winding unit → the first feeding terminal (claim 6).

Alternatively, it is desirable that the u-phase coil winding unit, the v-phase coil winding unit and the w-phase coil winding unit in the structure disclosed in any of claims 3 through 5 each be constituted with a first coil winding unit and a second coil winding unit disposed on a single diagonal and that the coils be wound at least twice over through a sequence; the first feeding terminal → the first u-phase coil winding unit → the second u-phase coil winding unit → the first neutral point → the first v-phase coil winding unit → the second v-phase coil winding unit → the second feeding terminal → the first (second) u-phase coil winding unit → the second (first) v-phase coil winding unit → the second neutral point → the first w-phase coil winding unit → the second w-phase coil winding unit → the third feeding terminal → the first (second) w-phase coil winding unit → the second (first) w-phase coil winding unit → the third neutral point → the first (second) u-phase coil winding unit → the second (first) u-phase coil winding unit → the first feeding terminal, so as to form at least two coil layers at each coil winding unit among the u-phase coil winding unit, the v-phase coil winding unit and the w-phase coil winding unit (claim 7). It is to be noted that "first/second" in the parentheses above indicate that coils may be wound for the second time around at the coil winding units with a given phase by switching the winding order between the first coil winding unit and the second coil winding unit.

### EFFECT OF THE INVENTION

By adopting the structure disclosed in claim 1, a parallel Δ connection can be achieved through a single winding operation without having to cut the coil wire at all. Thus, a 1.0mm-diameter coil wire can be wound in parallel, instead of a 1.2mm-diameter coil wire wound in series, as in the related art, without complicating the winding operation, which makes it possible to increase the total number of coil turns and consequently to increase the total sectional area of the coil wire. As a result, the ohmic loss is reduced, thereby achieving higher efficiency in the motor and greater output from the motor.

In the structure disclosed in claim 2, the first coil layer is directly formed at each coil winding unit and the second coil layer is formed above the first coil layer, thereby achieving parallel winding.

In the Y connection achieved in the structure according to claim 3, the potentials at the individual neutral points can be equalized without extending terminals from the neutral points to the control board and connecting them on the control board. As a result, the number of required parts does not increase and a higher level of freedom is afforded with regard to the control board structure design.

By adopting the structure disclosed in claim 4, a greater installation space is assured for the feeding terminals and the neutral points, which facilitates the installation of the electrically conductive member.

The structure disclosed in claim 5 makes it possible to use the potential at the neutral points as a control correction value or the like while assuring an efficient structure.

In the structure disclosed in claim 6, a parallel Y connection is achieved through a single winding operation without having to cut the coil wire at all by adopting the structural features of the present invention described above.

In the structure disclosed in claim 7, a parallel Y connection is achieved through a single winding operation without having to cut the coil wire at all and, at the same time, two coil layers are formed at each coil winding unit. Thus, the total coil sectional area is further increased and a highly efficient motor capable of providing a greater output is achieved.

### BRIEF DESCRIPTION OF THE DRAWINGS

FIG. 1 is a sectional view presenting a structural example that may be adopted in an electromagnetic motor according to the present invention;
FIG. 2(a) shows the structure of the stator in embodiment 1, FIG. 2(b) shows the winding structure adopted in embodiment 1 and FIG. 2(c) illustrates the winding sequence adopted to achieve the winding structure in the embodiment 1;
FIG. 3(a) shows the armature face at one end of the stator achieved in embodiment 2 and FIG. 3(b) shows the armature face at another end of the stator in the embodiment 2;
FIG. 4(a) shows the winding stnicture achieved in embodiment 2 and FIG. 4(b) shows the winding sequence adopted to achieve the winding stnicture in embodiment 2;
FIG. 5 shows the stnictures adopted at the feeding terminals and the neutral points in embodiment 2;
FIG. 6(a) shows the armature face at one end of the stator achieved in embodiment 3 and FIG. 6(b) shows the structure adopted in the conductive plate in embodiment 3;
FIG. 7(a) shows the structure of the stator achieved in embodiment 4, FIG. 7(b) shows the winding structure achieved in embodiment 4 and FIG. 7(c) shows the winding sequence adopted to achieve the winding structure in embodiment 4;
FIG. 8(a) shows a winding structure adopted in a Δ connection in the related art and FIG. 8(b) shows the structure of the stator included in the Δ connection structure in the related art; and
FIG. 9(a) shows a winding structure adopted in a Y connection in the related art and FIG. 9(b) shows the structure of the stator included in the Y connection structure in the related art.

### EXPLANATION OF REFERENCE NUMERALS

- 1: electromagnetic motor
- 2: rotating shaft
- 12, 60, 70, 80: stator
- 20: control board
- 33: coil
- 40: coil winding unit
- 50: feeding terminal
- 61: first armature face (stator end surface on one side)
- 62: second armature face (stator end surface on another side)
- 65: neutral point
- 66, 71: conductive plate (electrically conductive member)
- 72: extended portion

### BEST MODE FOR CARRYING OUT THE INVENTION

The following is an explanation of the preferred embodiments of the present invention, given in reference to the attached drawings.

### EMBODIMENT 1

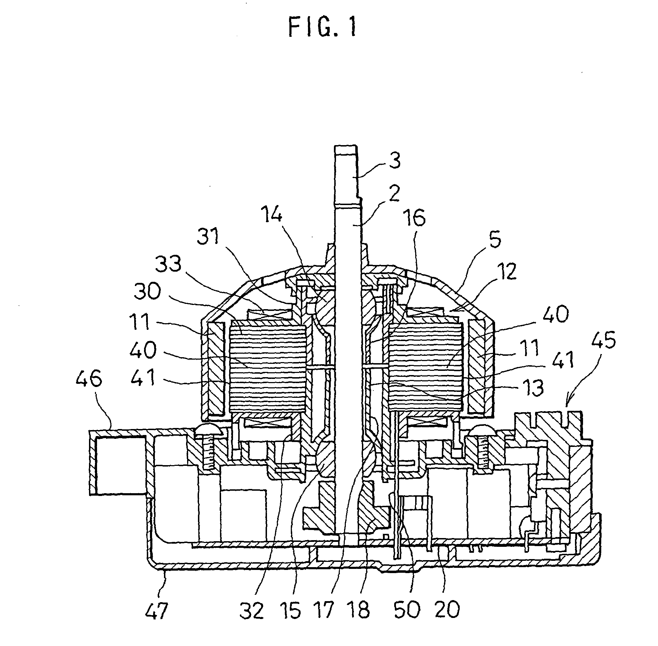

A brushless motor 1 in FIG. 1, in which a winding structure according to the present invention may be adopted, is used as a component of an air blower in an automotive air-conditioning system. A mounting unit 3 at which a fan is mounted is formed at the upper end of a rotating shaft 2 of the brushless motor 1, a yoke 5 assuming an umbrella shape is fixed below the mounting unit 3 and a plurality of magnets 11 are fixed at the internal circumferential surface of the cylindrical portion of the yoke 5.

The rotating shaft 2 is rotatably held at bearings 14 and 15, which, in turn, are respectively fixed to an upper bearing holder 16 and a lower bearing holder 17 disposed at a through hole 13 formed so as to pass through the center of a stator 12. A sensor magnet 18 is fixed at the lower end of the rotating shaft 2 and the sensor magnet 18 rotates in synchronization with the yoke 5. A control board 20 is disposed at a position under the rotating shaft 2 and the like, and a control circuit constituted with electronic elements such as a CPU, a capacitor, a transistor and a resistor, a switch unit that includes an FET and the like are disposed at the control board 20. A case housing 45 includes a motor holder 46 and a board cover 47, inside which the control board 20 and the like are disposed.

The stator 12 includes a stator core 30 constituted with an iron core, insulating covers 31 and 32 disposed so as to hold the stator core 30 from above and below and exciting coil 33 wound around the stator core 30 insulated by the insulating covers 31 and 32. At the center of the stator core 30, the through hole 13, at which the bearing holders 16 and 17 are disposed, is formed. The stator core 30 includes six coil winding units 40 extending along six different directions from the circumferential wall of the through hole 13. At the front end of each coil winding unit 40, a circular arc magnetic pole face 41 is formed so as to face opposite one of the magnets 11. In addition, a feeding terminal 50 extending to the control board 20 is connected to each exciting coil 33, so as to adjust the state of power supply to the exciting coil 33 in correspondence to the output from the control circuit. As a result, the stator 12 is able to generate the optimal rotating magnetic field based upon the rotating state of the yoke 5 having been detected.

In order to better explain the features of the stator 12 achieved in the embodiment, the six coil winding units 40 are individually referred to as 40Ua, 40Ub, 40Va, 40Vb, 40Wa and 40Wb, as shown in FIG. 2(a). 40Ua and 40Ub are the u-phase coil winding units, 40Va and 40Vb are the v-phase coil winding units and 40Wa and 40Wb are the w-phase coil winding units. The pair of coil winding units with a given phase are disposed on a diagonal. In addition, three feeding terminals 50 are provided, with the feeding terminal 50 present between 40Va and 40Ub referred to as a uv terminal, the feeding terminal 50 present between 40Wa and 40Vb referred to as a vw terminal and the feeding terminal 50 present between 40Ua and 40Wb referred to as a wu terminal, as shown in FIG. 2(a).

As shown in FIG. 2(b), the coil winding structure in the embodiment is achieved through a Δ connection adopting parallel winding. The actual winding sequence for achieving this winding structure shown in FIGS. 2(c) and 2(a) is as follows. The coil wire is (1) first hooked at the wu terminal → (2) wound around a portion U1a on the inner side of the coil winding unit 40Ua → (3) wound around a portion U1b on the inner side of the coil winding unit 40Ub → (4) hooked at the uv terminal → (5) wound around a portion V1a on the inner side of the coil winding unit 40Va → (6) wound around a portion V1b on the inner side of the coil winding unit 40Vb → (7) hooked at the vw terminal → (8) wound around a portion W1a on the inner side of the coil winding unit 40Wa → (9) wound around a portion W1b on the inner side of the coil winding unit 40Wb → (10) hooked at the wu terminal → (11) wound around a portion U2a on the outer side of the coil winding unit 40Ua → (12) wound around a portion U2b on the outer side of the coil winding unit 40Ub → (13) hooked at the uv terminal → (14) wound around a portion V2a on the outer side of the coil winding unit 40Va → (15) wound around a portion V2b on the outer side of the coil winding unit 40Vb → (16) hooked at the vw terminal → (17) wound around a portion W2a on the outer side of the coil winding unit 40Wa → (18) wound around a portion W2b on the outer side of the coil winding unit 40Wb → (19) hooked at the wu terminal. Through the steps (1) - (9) above, the first coil layers are formed, and the second coil layers are formed through the steps (10) ~ (19).

By executing the steps described above, a parallel Δ connection is achieved through a single winding operation without having to cut the coil wire at all. The winding structure allows a 1.0 mm-diameter coil wire to be wound in parallel, instead of winding a 1.2 mm-diameter coil wire in series, as in the related art, without complicating the winding operation. As a result, the total number of coil turns can be increased and the total coil sectional area can be increased. Since this in turn reduces ohmic loss, the motor achieves a higher level of efficiency and greater output.

In the following explanation of other embodiments of the present invention given in reference to drawings, the same reference numerals are assigned to components identical or similar to those in embodiment 1 described above to preclude the necessity for a repeated explanation thereof.

### EMBODIMENT 2

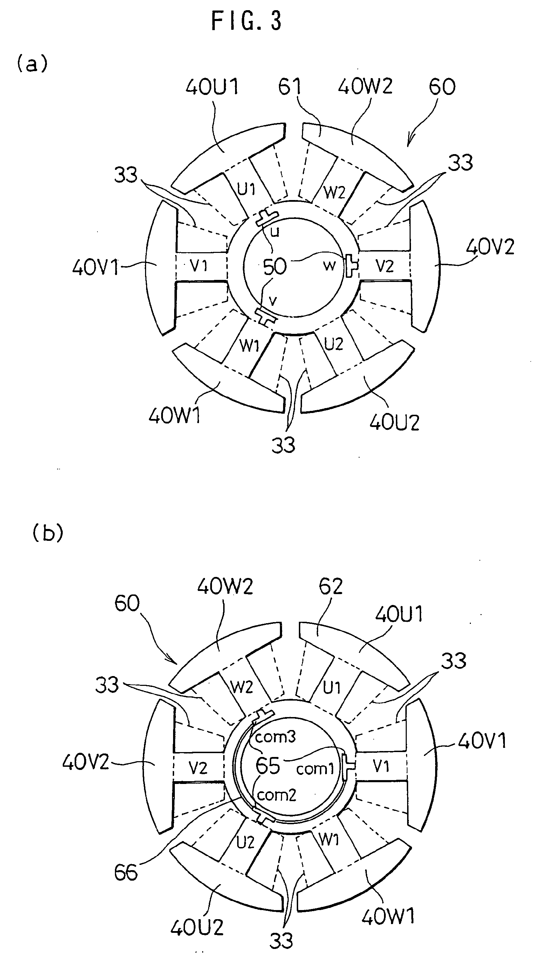

As shown in FIGS. 3(a) and 3(b), a stator 60 achieved in the embodiment includes six coil winding units 40U1, 40U2, 40V1, 40V2, 40W1 and 40W2 adopting a structure similar to the coil winding units in the stator 12 in embodiment 1. FIG. 3(a) shows a surface 61 of the stator 60 on one side (a first armature face), and FIG. 3(b) shows the surface 62 on the opposite side (a second armature face). On the first armature face 61, three feeding terminals (a u terminal, a v terminal and a w terminal) 50 to be connected to the control board 20 are disposed, whereas three neutral points (a com1 terminal, a com2 terminal and a com3) 65 are disposed at the second armature face 62.

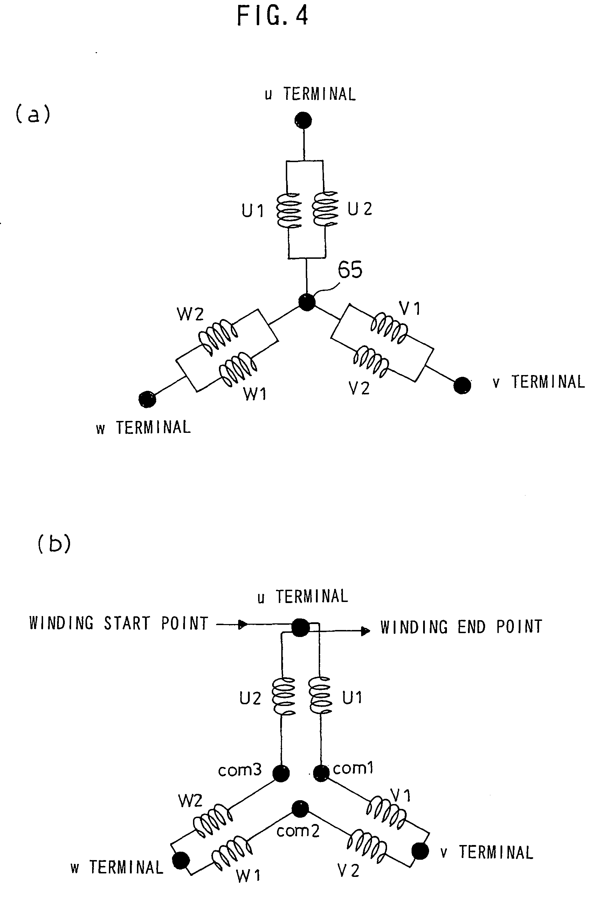

As shown in FIG. 4(a), a Y connection adopting parallel winding is achieved in the embodiment. The actual winding sequence for achieving this winding structure is shown in FIG. 4(b). Namely, the coil wire is; (1) hooked at the u terminal → (2) wound around the coil winding unit 40U1 → (3) hooked at the com1 terminal → (4) wound around the coil winding unit 40V1 → (5) hooked at the v terminal → (6) wound around the coil winding unit 40V2 → (7) hooked at the com2 terminal → (8) wound around the coil winding unit 40W1 → (9) hooked at the w terminal → (10) wound around the coil winding unit 40W2 → (11) hooked at the com3 terminal → (12) wound around the coil winding unit 40U2 → (13) hooked at the u terminal.

As shown in FIG. 5, the three feeding terminals 50 disposed at the first armature face 61 extend to the control board 20. The three neutral points 65 disposed at the second armature face 62 are connected with one another via an electrically conductive plate 66 constituted with a flexible metal plate or the like, as shown in FIG. 3(b) and FIG. 5. As a result, the potentials at the individual neutral points 65 are equalized.

By executing the steps described above, a parallel Y connection is achieved through a single winding operation without having to cut the coil wire at all. The total number of coil turns and the total coil sectional area are increased in this winding structure without complicating the winding operation and, as a result, a motor achieving a higher level of efficiency and greater output is provided by reducing ohmic loss. In addition, since the conductive plate 66 through which the neutral points 65 are connected with one another is disposed at the second armature face 62, structural restrictions imposed on the control board design are reduced compared to the prior art, which requires the plurality of neutral points to be extended to the control board to be connected with one another on the control board.

### EMBODIMENT 3

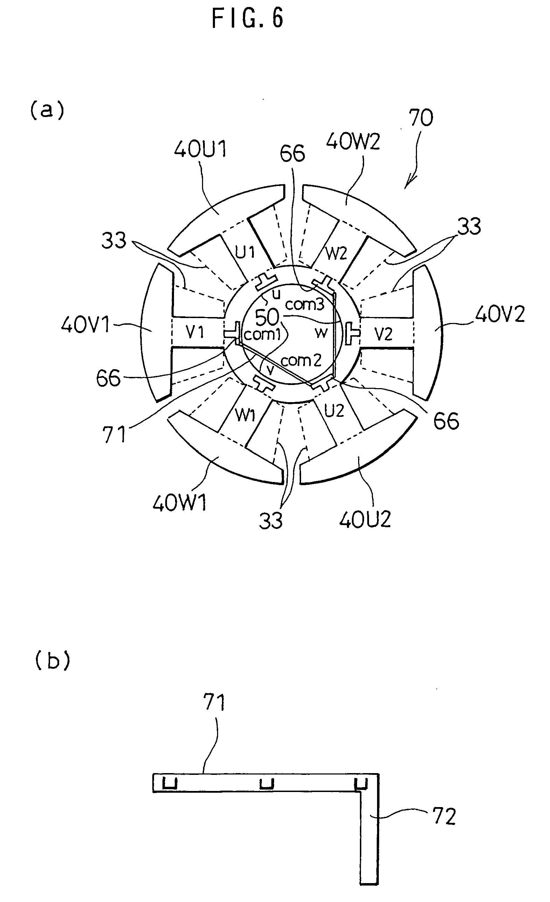

A stator 70 achieved in the embodiment shown in FIG. 6(a) includes six coil winding units 40U1, 40U2, 40Vl, 40V2, 40W1 and 40W2 and adopts a parallel winding Y connection, as does the stator 60 in embodiment 2 described earlier. A conductive plate 71 through which the three neutral points (the com 1 terminal, the com2 terminal and the com3 terminal) 66 are connected to one another includes an extended portion 72 that connects with a specific circuit at the control board 20, as shown in FIG. 6(b). This structure makes it possible to take in the potential at the neutral points 66 to be used as a control factor simply by extending a single terminal (the extended portion 72).

### EMBODIMENT 4

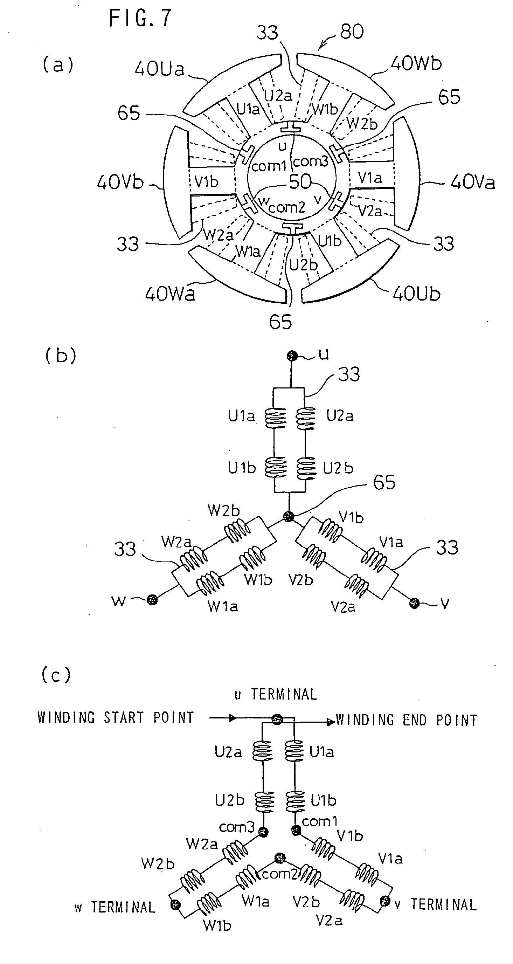

A stator 80 achieved in the embodiment shown in FIG. 7(a) is similar to those in embodiments 1 through 3 in that it includes six coil winding units 40Ua, 40Ub, 40Va, 40Vb, 40Wa and 40Wb. It also includes three feeding terminals (a u terminal, a v terminal and a w terminal) 50 and three neutral points (a com1 terminal, a com2 terminal and a com3 terminal) 65. The feeding terminals 50 and the neutral points 65 may be formed on the armature faces located on the sides opposite from each other as in embodiment 2 described earlier, or they may be formed on a single armature face.

As shown in FIG. 7(b), a Y connection adopting parallel winding is achieved in the embodiment. The actual winding sequence for achieving this winding structure is shown in FIG. 7(c The coil wire is (1) first hooked at the u terminal → (2) wound around a portion U1a on the inner side of the coil winding unit 40Ua → (3) wound around a portion U1b on the inner side of the coil winding unit 40Ub → (4) hooked at the com1 terminal → (5) wound around a portion V1b on the inner side of the coil winding unit 40Vb → (6) wound around a portion V1a on the inner side of the coil winding unit 40Va→ (7) hooked at the v terminal → (8) wound around a portion V2a on the outer side of the coil winding unit 40Va → (9) wound around a portion V2b on the outer side of the coil winding unit 40Vb → (10) hooked at the com2 terminal → (11) wound around a portion W1a on the inner side of the coil winding unit 40Wa → (12) wound around a portion W1b on the inner side of the coil winding unit 40Wb → (13) hooked at the w terminal → (14) wound around a portion W2b the outer side of the coil winding unit 40Wb → (15) wound around a portion W2a on the outer side of the coil winding unit 40Wa → (16) hooked at the com3 terminal → (17) wound around a portion U2b on the outer side of the coil winding unit 40Ub → (18) wound around a portion U2a on the outer side of the coil winding unit 40Ua → (19) hooked at the u terminal. Through the steps (1) ~ (9) above, the first coil layers are formed, and the second coil layers are formed through the steps (10) ~ (19).

By executing the steps described above, a parallel winding Y connection with two coil layers formed at the individual coil winding units 40Ua, 40Ub, 40Va, 40Vb, 40Wa and 40Wb is achieved through a single winding operation without having to cut the coil wire at all. Since this winding structure further increases the total number of coil turns, the total sectional area), a further improvement in the efficiency and the output is achieved.

### INDUSTRIAL APPLICABILITY

As described above, the present invention provides an electromagnetic motor achieving a higher level of efficiency and greater output without complicating the manufacturing steps or leading to an increase in production costs.

## Claims

1. An electromagnetic motor (1) adopting a Δ connection structure, which includes a u-phase coil winding unit (40Ua, 40Ub), a v-phase coil winding unit (40Va, 40Vb) and a w-phase coil winding unit (40Wa, 40Wb) radially extending from a stator (12) fixed to a rotating shaft (2) and set with a phase difference relative to one another and a first feeding terminal, a second feeding terminal and a third feeding terminal through which a predetermined current is supplied to coils (33) at the individual phases, **characterized in:**
**that** coils are wound at least twice over through a sequence; said first feeding terminal → said u-phase coil winding unit (40Ua, 40Ub) → said second feeding terminal → said v-phase coil winding unit (40Va, 40Vb) → said third feeding terminal → said w-phase coil winding unit (40Wa, 40Wb), so as to form at least two coil layers at each coil winding unit among said u-phase coil winding unit (40Ua, 40Ub), said v-phase coil winding unit (40Va, 40Vb) and said w-phase coil winding unit (40Wa, 40Wb).

2. An electromagnetic motor according to claim 1, **characterized in:**
**that** said u-phase coil winding unit (40Ua, 40Ub), said v-phase coil winding unit (40Va, 40Vb) and said w-phase coil winding unit (40Wa, 40Wb) are each constituted with a first coil winding unit and a second coil winding unit disposed on a single diagonal; and
**that** said coils are wound at least twice over through a sequence; said first feeding terminal → a first u-phase coil winding unit (40Ua) → a second u-phase coil winding unit (40Ub) → said second feeding terminal → a first v-phase coil winding unit (40Va) → said second v-phase coil winding unit (40Vb) → said third feeding terminal → a first w-phase coil winding unit (40Wa) → said second w-phase coil winding unit (40Wb).

3. An electromagnetic motor (1) adopting a Y connection structure, which inlcudes a u-phase coil winding unit (40Ua, 40Ub), a v-phase coil winding unit (40Va, 40Vb) and a w-phase coil winding unit (40Wa, 40Wb) radially extending from a stator (70) fixed to a rotating shaft (2) with a phase difference relative to each other, a first feeding terminal, a second feeding terminal and a third feeding terminal through which a predetermined current is supplied to coils (33) at the individual phases and a first neutral point (66), a second neutral point (66) and a third neutral point (66) with potentials equal to one another, **characterized in:**
**that** said first through third neutral points (66) are electrically connected with one another via an electrically conductive member (71) at one end surface of said stator (70) or over an area near said one end surface.

4. An electromagnetic motor according to claim 3, **characterized in:**
**that** said first through third feeding terminals are disposed at a surface located on a side opposite from said one end surface or in an area near the surface on the opposite side.

5. An electromagnetic motor according to claim 3 or claim 4, **characterized in:**
**that** said electrically conductive member (71) includes an extended portion (72) to be connected with a control board.

6. An electromagnetic motor according to any of claims 3 through 5, **characterized in:**
**that** said u-phase coil winding unit (40Ua, 40Ub), said v-phase coil winding unit (40Va, 40Vb) and said w-phase coil winding unit (40Wa, 40Wb) are each constituted with a first coil winding unit and a second coil winding unit disposed on a single diagonal; and
**that** said coils are wound at least once over through a sequence; said first feeding terminal → a first u-phase coil winding unit (40Ua) → said first neutral point (66) → a first v-phase coil winding unit (40Va) → said second feeding terminal → a second v-phase coil winding unit (40Vb)→ said second neutral point (66) → a first w-phase coil winding unit (40Wa) → said third feeding terminal → a second w-phase coil winding unit (40Wb) → said third neutral point (66) → a second u-phase coil winding unit (40Ub) → said first feeding terminal.

7. An electromagnetic motor according to any of claims 3 through 5, **characterized in:**
**that** said u-phase coil winding unit (40Ua, 40Ub), said v-phase coil winding unit (40Va, 40Vb) and said w-phase coil winding unit (40Wa, 40Wb) are each constituted with a first coil winding unit and a second coil winding unit disposed on a single diagonal; and
**that** said coils are wound at least twice over through a sequence; said first feeding terminal → a first u-phase coil winding unit (40Ua) → a second u-phase coil winding unit (40Ub) → said first neutral point (65) → a first v-phase coil winding unit (40Va) → a second v-phase coil winding unit (40Vb) → said second feeding terminal → said first (second) v-phase coil winding unit (40Va (40Vb)) → said second (first) v-phase coil winding unit (40Vb (40Va)) → said second neutral point (65) → said first w-phase coil winding unit (40Wa) → said second w-phase coil winding unit (40Wb) → said third feeding terminal → a first (second) w-phase coil winding unit (40Wa (40Wb)) → a second (first) w-phase coil winding unit (40Wb (40Wa))→ said third neutral point → said first (second) u-phase coil winding unit (40Ua (40Ub))→ said second (first) u-phase coil winding unit (40Ub (40Ua)) → said first feeding terminal, so as to form at least two coil layers at each coil winding unit among said u-phase coil winding unit (40Ua, 40Ub), said v-phase coil winding unit (40Va, 40Vb) and said w-phase coil winding unit (40Wa, 40Wb).
